**Europäisches Patentamt**

**European Patent Office**

**Office européen des brevets**

(19)

(11) Veröffentlichungsnummer: **0 172 329**

**B1**

(12) # EUROPÄISCHE PATENTSCHRIFT

(45) Veröffentlichungstag der Patentschrift:
23.11.88

(21) Anmeldenummer: **85106954.2**

(22) Anmeldetag: **05.06.85**

(51) Int. Cl.⁴: **F 16 K 27/04,** F 16 K 11/06

(54) **Wassermischventil.**

(30) Priorität: **03.07.84 DE 3424435**
**02.02.85 DE 3503583**

(43) Veröffentlichungstag der Anmeldung:
**26.02.86 Patentblatt 86/9**

(45) Bekanntmachung des Hinweises auf die Patenterteilung:
**23.11.88 Patentblatt 88/47**

(84) Benannte Vertragsstaaten:
**AT BE CH DE FR IT LI NL SE**

(56) Entgegenhaltungen:
**DE-A-1 550 060**
**DE-A-1 759 520**
**DE-A-2 739 154**
**DE-A-3 043 089**
**DE-A-3 137 774**

(73) Patentinhaber: **FRIEDRICH GROHE ARMATURENFABRIK GmbH & CO,** Hauptstrasse 137, D-5870 Hemer 1 (DE)

(72) Erfinder: **Kahle, Dieter,** Waldemeistrasse 33, D-5860 Iserlohn (DE)
Erfinder: **Humpert, Jürgen,** Oberlinweg 18, D-5870 Hemer (DE)
Erfinder: **Pawelzik, Manfred,** Herringser Weg 5a, D-4770 Soest (DE)

EP 0 172 329 B1

**0 172 329**

## Beschreibung

Die Erfindung betrifft ein Wassermischventil mit einem Handgriff zur Einstellung des Mischungsverhältnisses und der Durchflußmenge mit den im Oberbegriff des Anspruchs 1 angegebenen Merkmalen.

Mischventile dieser Gattung sind bespielsweise aus den Druckschriften DE-A-1 550 060, DE-A-3 137 774 bekannt. Das Mischventil ist dabei in einer Kapsel angeordnet, die in eine entsprechende Bohrung am Sanitärarmaturenkörper versenkt eingesetzt wird. Durch die versenkte Anordnung der Mischventilkapsel ist es u.a. erforderlich, die Sanitärarmatur mit einem relativ großen Außendurchmesser zu versehen, was vielfach als nachteilig empfunden wird. Außerdem ist es erforderlich, die Bohrung in der Sanitärarmatur und die äußere Stirnseite der Kapsel mit einem Hebelkopf zu verdecken, wobei meist der Hebelkopf die Bewegungen des etwa koaxial zur Mittelachse angeordneten Stellhebels mitvollzieht und somit Taumelbewegungen erfährt, die der Armatur ein unschönes Aussehen verleihen können.

Ferner sind Mischventile (DE-A-1 759 520) mit taumelfreien Hebelköpfen bekannt, wobei allerdings ein separater Hebelkopf zusätzlich zur Armatur mit Mischventil erforderlich ist.

Der Erfindung liegt die Aufgabe zugrunde, die bekannten Mischventile zu verbessern und so zugestalten, daß eine optimal schlanke Bauform mit relativ geringem Aufwand ermöglicht wird und die Montage an der Armatur leicht durchführbar ist.

Diese Aufgabe wird erfindungsgemäß durch die im kennzeichnenden Teil des Anspruchs 1 angegebenen Merkmale gelöst. Weitere Ausgestaltungen der Erfindung sind in den Ansprüchen 2 bis 23 angegeben.

Die mit der Erfindung erzielbaren Vorteile bestehen insbesondere darin, daß in dem Hebelkopf das gesamte Mischventil mit Ventilscheiben und Abdichtungen sowie die Betätigungsmechanik integriert werden können. Dieses ermöglicht eine kompakte, flache und schlanke Bauform von Eingriffmischventilen mit Ventilscheiben bei gleichzeitig verringertem Aufwand.

Zweckmäßig sind die tragenden Teile des Gehäuses aus Metall hergestellt, so daß es einerseits hohen Belastungen standhalten kann und andererseits die bei Verwendung von Kunststoff häufig auftretenden Alterungsprobleme im wesentlichen ausgeschlossen sind.

Der im Gehäuse mittels Gewinde gehalterte konzentrische Stellring ermöglicht in einfacher Weise eine genaue Halterung des Futterstücks für den Handhebel im Gehäuse, eine Ein- und Nachstellbarkeit der Anpreßkraft für die Ventilscheiben sowie auch ein nachträgliches Auswechseln von Ventilscheiben.

Schließlich sind die Befestigungsschrauben am Boden des Gehäuses durch die Bohrungen auf dem Lochkreis des Stellrings leicht zugänglich und ermöglichen außerdem das Einbringen von Schmiermittel zum Nachfetten der Ventilscheiben sowie der sonstigen Gleitflächen ohne Demontage.

Ausführungsbeispiele der Erfindung sind in der Zeichnung dargestellt und werden im folgenden näher beschrieben. Es zeigt

Figur 1 ein Eingriffmischventil in vergrößertem Maßstab im Längsschnitt;
Figur 2 das Mischventil gemäß Figur 1 in der Schnittebene II;
Figur 3 das Mischventil gemäß Figur 1 um 90° gedreht in Ansicht;
Figur 4 das Mischventil gemäß Figur 1 in der Schnittebene IV;
Figur 5 das Mischventil gemäß Figur 1 in der Schnittebene V;
Figur 6 das Mischventil gemäß Figur 1 in der Schnittebene VI;
Figur 7 ein anderes Eingriffmischventil invergrößertem Maßstab im Längsschnitt, montiert an einer teilweise dargestellten Einloch-Waschtischarmatur.
Figur 8 ein weiteres Eingriffmischventil im Längsschnitt;
Figur 9 das Mischventil gemäß Figur 8 in der Schnittebene II;
Figur 10 das Mischventil gemäß Figur 8 im Längsschnitt um 90° gedreht;
Figur 11 das Mischventil gemäß Figur 10 in der Schnittebene IV;
Figur 12 einen Handhebel in Perspektivdarstellung, wie er in dem Mischventil gemäß Figur 8 eingesetzt ist;
Figur 13 einen anderen Handhebel in Perspektivdarstellung.

Der Einfachheit halber sind bei den Ausführungsbeispielen in der Zeichnung gleiche oder entsprechende Elemente mit jeweils gleichen Bezugszeichen versehen.

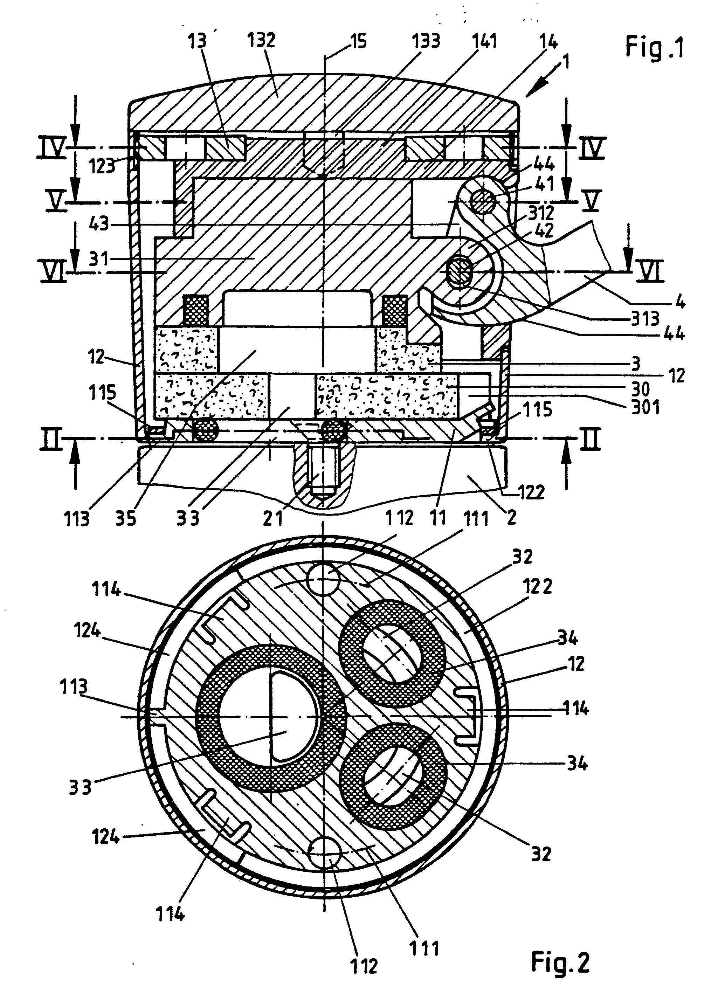

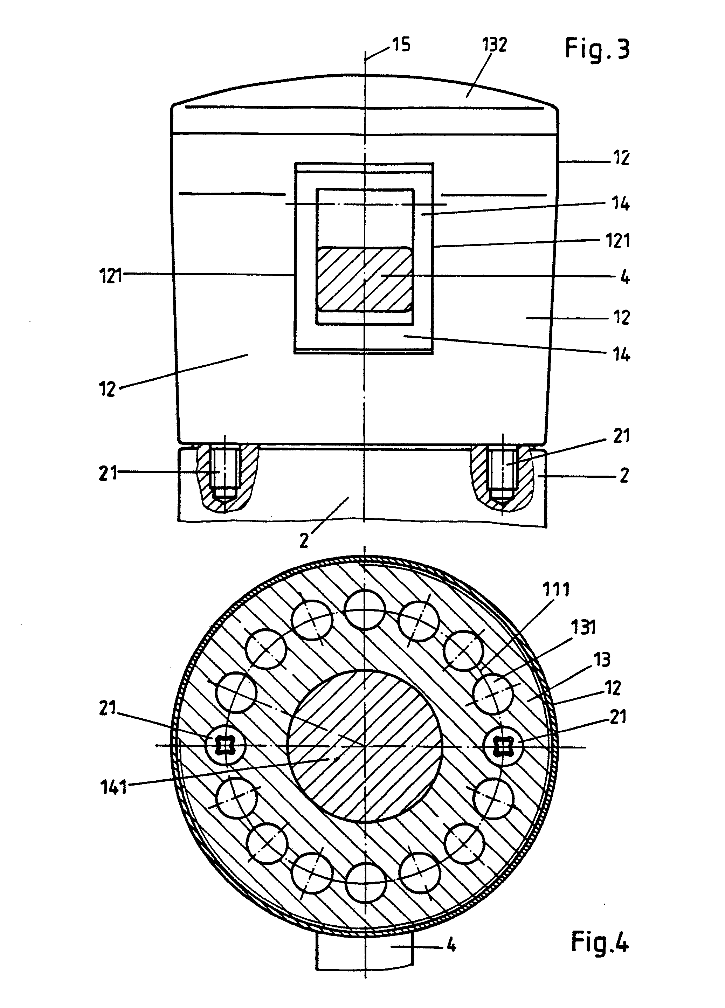

Das in den Figuren 1 bis 6 dargestellte Mischventil ist in einem etwa zylindrischen Gehäuse 1 zu einer Baueinheit zusammengefaßt. Das Gehäuse 1 ist dabei mit Befestigungsschrauben 21 als Armaturenkopfteil auf einer Armatur 2 befestigt, wobei die Armatur 2 an der Stirnseite Austrittsöffnungen für Kalt- und Warmwasser und eine Eintrittsöffnung für Mischwasser aufweist (in der Zeichnung nicht dargestellt). Die Befestigungsschrauben 21 sind dabei als Senkschrauben in einen Boden 11 des Gehäuses 1 in Bohrungen 112, die auf einem Lochkreis 111 angeordnet sind, gehaltert. Oberhalb des Bodens 11 ist eine Ventilsitzscheibe 30 aus keramischem Material ortsfest auf dem Boden 11 gelagert und mit Einlaßöffnungen 32 für Kalt- und Warmwasser sowie einer Auslaßöffnung 33 für Mischwasser versehen und mit entsprechenden Kanälen in der Armatur 2 unter Zwischenlage von Dichtringen 34, die im Bodenbereich gehaltert sind, verbunden. An der Ventilsitzscheibe 30 ist eine aus keramischem Material hergestellte Ventilregelscheibe 3 mit einem Misch- und Umlenkkanal 35 angelagert. Die aneinanderliegenden Flächen der beiden Scheiben sind zur Gewährleistung eines dichten Paßsitzes mit hochpolierten Oberflächen versehen. Die Ventilregelscheibe 3 ist mit einer Abdeckscheibe 31 an der von der Ventilsitzscheibe 30 abgekehrten Stirnseite bewegungsfest verbunden,

2

wobei die Abdeckscheibe 31 den als glatten Durchbruch ausgebildeten Misch- und Umlenkkanal 35 an der einen Stirnseite dicht verschließt. Der Misch- und Umlenkkanal 35 ist dabei so bemessen, daß er durch ein Verschieben der Ventilregelscheibe 3 in unterschiedliche Überlappung mit den Durchtrittsöffnungen der Ventilsitzscheibe 30 gebracht werden kann.

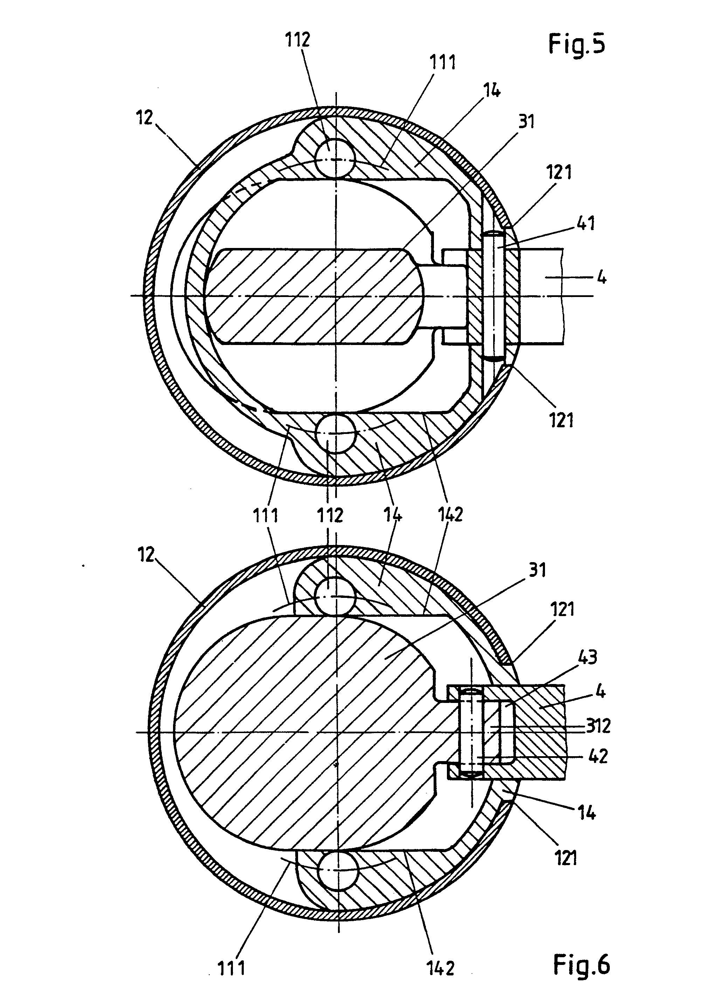

An dem Boden 11 ist in einer Ringnut eine metallene Mantelhülse 12 mit einem Innenflansch 122 angelagert und trägt an der gegenüberliegenden Stirnseite einen mittels Gewinde 123 gehalterten Stellring 13. Zwischen dem Stellring 13 und der Abdeckscheibe 31 ist ein Futterstück 14 aus z. B. gut gleitfähigem Kunststoff angeordnet, das einerseits in einem Fenster 121 der Mantelhülse 12 einfaßt und andererseits mit einem Zapfen 141 in einer konzentrischen Führung des Stellrings 13 ruht, so daß es formschlüssig in dem Gehäuse 1 gehalten ist. In dem von dem Futterstück 14 ausgekleideten Fenster 121 ist ein Randhebel 4 mittels eines in dem Futterstück 14 gehalterten Lagerzapfen 41 befestigt. Der etwa radial aus dem Gehäuse 1 herausgeführte Handhebel 4 ist im äußeren Bereich nur zum Teil in der Zeichnung dargestellt. Der innere Bereich des Handhebels 4 weist eine Ausnehmung 43 auf, die ein an der einen Seite der Abdeckscheibe 31 ausgebildetes Augenlager 312 umfaßt, und ist mit einem Verbindungsstift 42, wie insbesondere aus der Zeichnung Figur 6 zu entnehmen ist, an die Abdeckscheibe angelenkt. Wird nun der Handhebel 4 auf- und abbewegt, so erfährt die Abdeckscheibe 31 und mit ihr die Ventilregelscheibe 3 eine Radialbewegungs in einer Radialführung 142 des Futterstücks 14. Damit der von dem Verbindungsstift 42 beschriebene Kreisbogen bei der Auf- und Abbewegung von dem Augenlager 312 kompensiert werden kann, ist das Augenlager 312 mit einem Langloch 313 parallel zur Mittelachse oder Drehachse 15 des Gehäuses 1 versehen. Zur dichten Durchführung des Handhebels 4 im Bereich des Fensters 121 sind die parallel zum Lagerzapfen 41 angeordneten Oberflächen 44 zylindrisch gewölbt und gleiten in entsprechend ausgebildeten Wölbungen des Futterstücks.

Durch ein Auf- und Abschwenken des Handhebels 4 kann die Ventilregelscheibe 3 radial zur Ventilsitzscheibe 30 verschoben werden, so daß durch diese Bewegung die Gesamtdurchflußmenge des Ventils bestimmt werden kann. Wird dagegen der Handhebel 4 um die Drehachse 15 verschwenkt, so wird die Mantelhülse 12 mit dem Stellring 13 und dem Futterstück 14 zusammen mit der Ventilregelscheibe 3 zur Ventilsitzscheibe 30 verdreht, da die Ventilsitzscheibe 30 fest mit dem Boden 11 verbunden ist. Durch diese Bewegung kann das Mischungsverhältnis von Kalt- und Warmwasser eingestellt werden.

Das Ventil kann etwa in folgender Weise montiert werden: Zunächst wird der Boden 11, der mit drei etwa symmetrisch angeordneten Einschnitten 114 versehen ist, an den Einschnitten 114 leicht abgekantet und die Befestigungsschrauben 21 in die Bohrungen 112 eingefügt. Danach kann die Ventilsitzscheibe auf dem Boden 11 gelagert werden, wobei die Einschnitte 114 in Schlitze 301 der Ventilsitzscheibe 30 einfassen und sie drehfest am Bodenhaltern. Auf der Ventilsitzscheibe 30 kann die Ventilregelscheibe 3 aufgelagert sein.

Nunmehr wird die Abdeckscheibe 31 mittels Verbindungsstift 42 mit dem Handhebel 4 verbunden und der Handhebel 4 von innen durch das Fenster 121 in Futterstück 14 eingeschoben und mit dem Lagerzapfen 41 in dieser Position gehalten. Hiernach wird die Mantelhülse 12 über den Boden 11 gestreift und die Montageeinheit, Futterstück 14, Abdeckscheibe 31 und Handhebel 4 von der oberen Stirnseite der Mantelhülse 12 in die Mantelhülse eingeführt und radial in das Fenster 121 eingeschoben und die Abdeckscheibe 31 mit der Ventilregelscheibe 3 formschlüssig verbunden. Nunmehr kann der Stellring 13 in das Gewinde 123 eingeschraubt werden. Hierbei wird der zentrale Zapfen 141 des Futterstücks 14 von der Führung des Stellrings 13 aufgenomnen, so daß das Futterstück 14 formschlüssig mit der Mantelhülse 12 verbunden ist. Die beiden Ventilscheiben können hiernach durch ein entsprechend tiefes Einschrauben mit der erforderlichen Vorspannung aufeinander gepreßt werden.

Dadurch das der Stellring 13 mit einem Lochkreis 111 versehen ist, der dem Lochkreis im Boden 11 entspricht, in dem eine Vielzahl von Bohrungen 131 angeordnet sind, sind die Befestigungsschrauben 21 im montierten Zustand in einer mittleren Ventilstellung von oben zugängig und können mittels Schraubendreher auf einer Armatur 2 eingeschraubt werden, so daß eine feste und mittels Dichtringen 34 dichte Verbindung zwischen Ventilsitzscheibe 30 und der Armatur 2 mit den Zu- und Abführungskanälen hergestellt werden kann. Schließlich kann eine Abdeckkappe 132, die mit zwei entsprechend den Befestigungsschrauben 21 angeordneten Zapfen 133 versehen ist, der Stellring 13 harmonisch abgedeckt und mittels der Zapfen 133, die durch den Stellring 13 hindurchfassen, an dem Futterstück 14 in den Bohrungen 112 formschlüssig verriegelt werden.

Zur Drehbegrenzung der Mantelhülse 12 ist an dem Innenflansch 122 eine ringförmige Ausnehmung 124 vorgesehen, in die ein radialer Fortsatz 113 des Bodens 11 hineinragt. Zur guten Gleitfähigkeit der Mantelhülse 12 am Boden 11 ist ein Gleitring 115 in der Ringnute des Bodens 11 eingelagert, an dem der Innenflansch 122 anliegt. Anstatt des Gleitrings 115 kann selbstverständlich auch ein Wälzlager oder andere Gleitmittel zwischen Boden 11 und Innenflansch 13 vorgesehen werden.

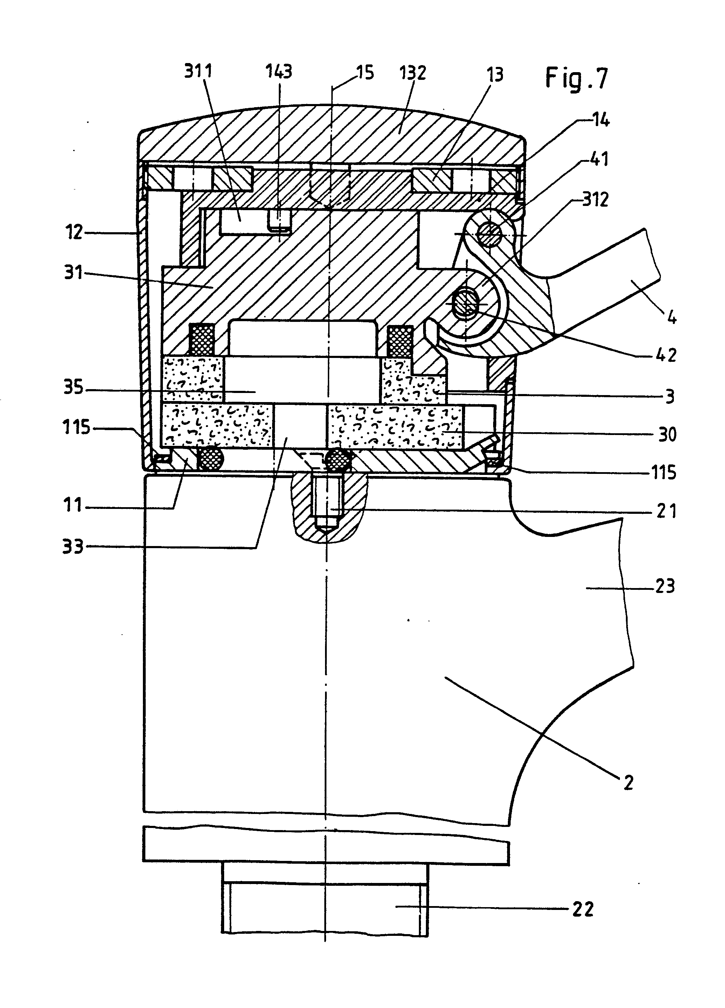

Das in der Figur 7 dargestellte Ausführungsbeispiel entspricht im wesentlichen dem in den Figuren 1 bis 6 gezeigten. Lediglich zur Begrenzung der Radialbewegung der Ventilregelscheibe 3 mit der Abdeckscheibe 31 ist eine Radialnut 311 in der Stirnfläche der Abdeckscheibe 31 ausgebildet, in die ein im Futterstück 14 gehalterter Stift 143 hineinragt. Neben der Begrenzung der Radialbewegung bewirkt der Stift 143 außerdem eine zusätzliche Mitnahme bei einer Drehbewegung des Futterstücks 14 in die Drehachse 15. Zur guten Mitnahme der Abdeckscheibe 31 bei Drehbewegungen des Gehäuses 1 um die Drehachse 15 kann auch alternativ die von der Ventilregelscheibe 3 abgekehrte Stirnseite der Abdeckscheibe 31 eine Paßfeder tragen, die in einer entsprechend dimensionierten Radialnut in der Stirnseite des Futterstücks 14 eingreift, wodurch z. B. der Verbindungsstift 42 beim Augenlager 312 lediglich die Radialbewegung beim Auf- und Abschwenken des Handhebels 4 auf die Abdeckscheibe 31 überträgt und bei einer Schwenkbewegung um die Drehachse 15 der Lagerzapfen 41 die Drehbewegung auf das Futterstück 14 und von hier über die Radialnut auf die Paßfeder formschlüssig auf die Ventilregelscheibe 3 überträgt.

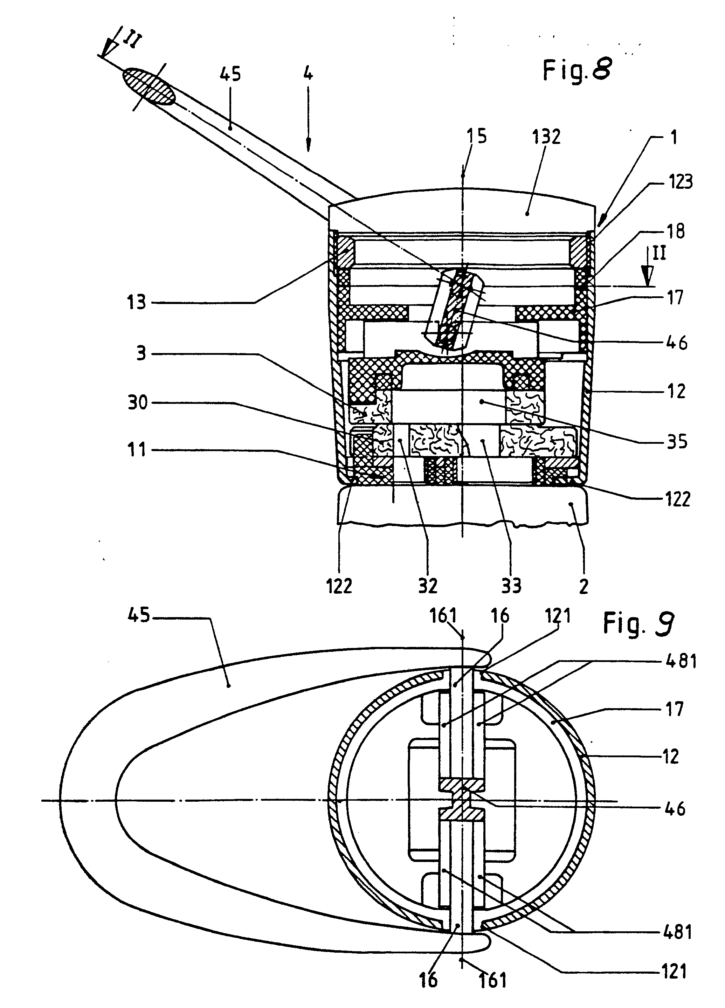

Das in den Figuren 8 bis 12 dargestellte Mischventil entspricht, bis auf die Betätigungseinrichtung, den vorbeschriebenen Ausführungsbeispielen.

An den Boden 11 ist in einer Ringnut eine Mantelhülse 12 mit einem Innenflansch 122 angelagert und trägt an der gegenüberliegenden Stirnseite einen mittels Gewinde 123 gehalterten Stellring 13. Zwischen dem Stellring 13 und der Ventilregelscheibe 3 ist ein Druckstück 17 und ein Druckring 18 in der Mantelhülse 12 axial verschiebbar angeordnet. Das Druckstück 17 weist zwei parallel angeordnete Schultern 171 auf, an denen sich die Ventilregelscheibe 3 axial abstützt.

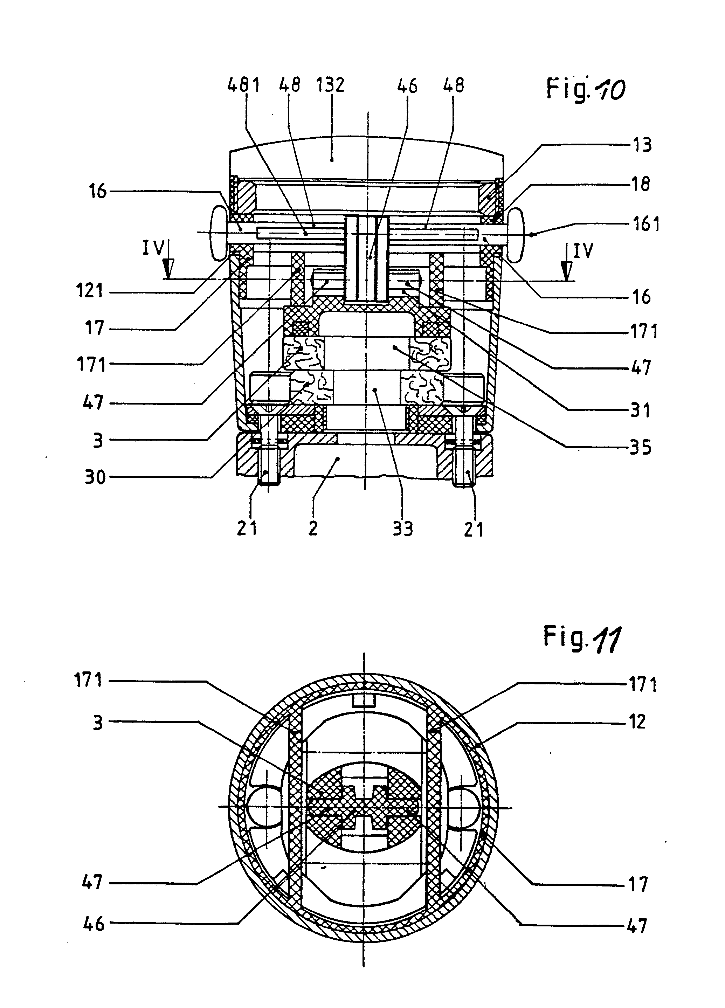

Zur Verschiebung der Ventilregelscheibe 3 auf der Ventilsitzscheibe 30 ist ein Handhebel 4 auf gegenüberliegenden Seiten radial aus der Mantelhülse 12 herausgeführt. Der Handhebel 4 wird dabei in seinem quer zur Drehachse 15 angeordneten Bereich von einer Welle 48 gebildet und trägt etwa parallel zur Drehachse 15 einen Hebelarm 46 mit doppel-T-förmigem Querschnitt. Die Welle 48 ist im Bereich der Wandung der Mantelhülse 12 angeordneten Schwenklagern 16 gehaltert. Die Schwenklager 16 sind zweiteilig ausgebildet, wobei die untere Hälfte in dem Druckstück 17 und die obere Hälfte in dem Druckring 18 eingeformt sind. Zur drehfesten Verbindung der Mantelhülse mit dem Druckstück 17 und dem Druckring 18 sind die Schwenklager 16 so ausgebildet, daß sie jeweils in ein schlitzartiges Fenster 121 einfassen, wie insbesondere aus Figur 9 und 10 zu entnehmen ist. Zur Stabilitätsverbesserung ist die Welle 48 mit Verstärkungsrippen 481 versehen, die gleichzeitig mit ihren Stirnflächen an den Schwenklagern 16 anliegen und somit die Welle 48 in ihrer Axiallage sichern. An dem Hebelarm 46 ist parallel zur Lagerachse 161 der Schwenklager 16 ein Querstift 47 ausgebildet. Der Querstift 47 faßt in eine entsprechende Ausnehmung 31 der Ventilregelscheibe 3 ein. An die sich quer durch die Mantelhülse 12 erstreckende Welle 48 des Handhebels 4 ist am äußeren Bereich ein etwa um 90 zur Lagerachse 161 verkröpfter Handgriff in Form eines geschlossenen Bügels angeformt.

Wird nun der Handgriff 45, wie er in Figur 8 gezeigt ist, abwärts bewegt, so erfährt die Ventilregelscheibe 3 über den Hebelarm 46 und den Querstift 47 eine Radialbewegung derart, daß die voll geöffneten Einlaßöffnungen 32 zunehmend versperrt werden, bis der Wasserdurchfluß völlig unterbrochen ist. Die umgekehrte Bewegung, also ein Anheben eines Handgriffs 45, bewirkt die Öffnung des Ventils.

Wird dagegen der Handgriff 45 um die Drehachse 15 gedreht, so wird entsprechend die Mantelhülse 12, Hebelarn 46, Querstift 47 und die drehfest mit dem Querstift verbundene Ventilregelscheibe 3 zu der mit dem Boden 11 feststehenden Ventilsitzscheibe 30 verdreht. Durch die Drehbewegung um die Drehachse 15 wird somit das Mischungsverhältnis des zufließenden kalten und warmen Wassers verändert, wobei die Gesamtdurchflußmenge in wesentlichen unverändert bleibt.

Der Zusammenbau des Wassermischventils gemäß Figur 8 bis 12 kann z. B. in folgender Weise vorgenommen werden: In die Mantelhülse 12 werden zunächst der Boden 11 mit der Ventilsitzscheibe 30 und der Ventilregelscheibe 3 eingesetzt. Danach wird das Druckstück 17, mit der unteren Hälfte des Schwenklagers 16 in die Fenster 121 einfassend, von oben eingeschoben und im Anschluß der Handhebel 4 mit seinem Querstift 47 in die Ausnehmung 31 der Ventilregelscheibe 3 eingeschoben und die Welle 48 in die untere Hälfte des Schwenklagers 16 eingelegt. Danach kann entsprechend der Druckring 18 von oben in die Mantelhülse 12 eingeschoben werden und die gesamte Baueinheit mit den Stellring 13 verspannt werden. Nunmehr kann das als Armaturenkopfteil ausgebildete Wassermischventil mit den Befestigungsschrauben 21 auf der Armatur befestigt werden. Schließlich kann noch eine Abdeckkappe 132 auf das offene Stirnende der Mantelhülse 12 gesetzt werden, worauf die Armatur betriebsbereit ist.

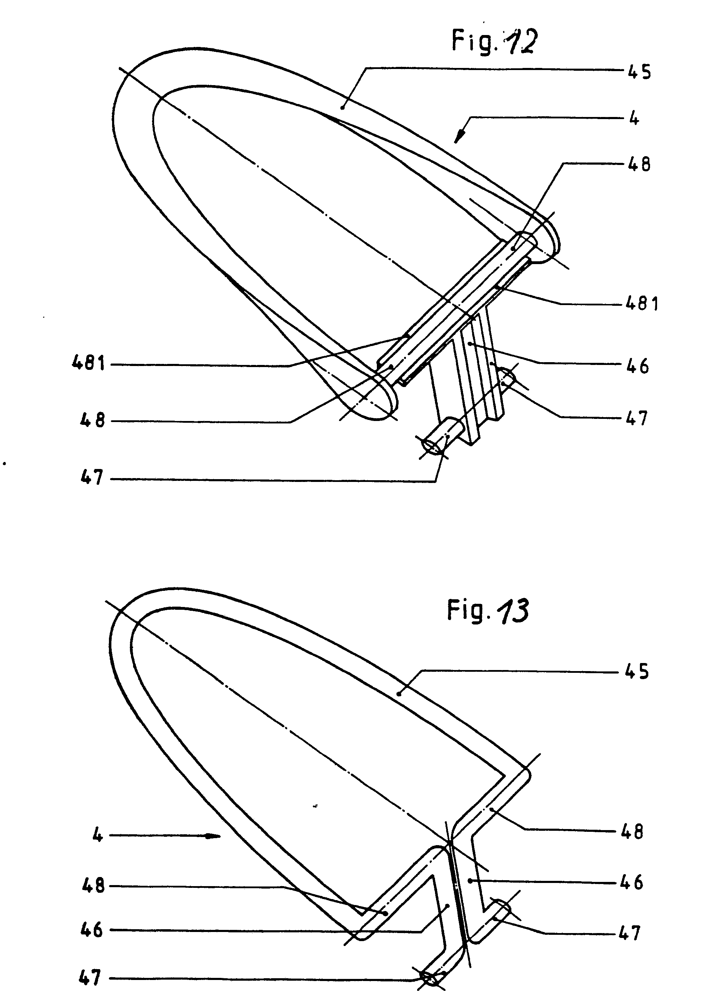

Der Handhebel 4, wie er in Figur 12 gezeigt ist, kann zweckmäßig im Zinkdruckgußverfahren einstückig hergestellt werden, wobei auch der Querstift 47 mit angegossen werden kann.

In der Figur 13 ist ein anderer Handhebel gezeigt, der aus einem Rundmaterialstab geformt ist. Hierbei bilden die beiden Endbereiche des Rundmaterialstabes den Hebelarm 46, wobei die beiden Endstücke parallel zur Lagerachse 161 gebogen sind und den Querstift 47 formen.

Neben den vorstehend beschriebenen Handhebelversionen sind noch weitere möglich. So kann beispielsweise der Handhebel nur an einer Seite radial aus der Mantelhülse herausgeführt sein, wobei der Handgriff dann etwa tangential oder verkröpft zum Gehäuse 1 angeordnet werden kann.

Bei den vorstehend beschriebenen Ausführungsbeispielen wird das Mischventil über Kalt- und Warmwasserzuflußleitungen versorgt. Die Kalt- und Warmwasserleitungen werden dabei durch einen an der Armatur 2 ausgebildeten Befestigungsschaft 22 in die Armatur 2 eingeführt und mit dem Mischventil verbunden. Das erzeugte Mischwasser wird über ein Auslaufrohr 23 oder über eine separate Leitung durch den Befestigungsschaft 22 abgegeben. Die in den Ausführungsbeispielen gezeigten Mischventile können aber auch beim Betrieb eines Warmwasserüberlaufspeichers eingesetzt werden. Hierbei ist der Kaltwasserzufluß an die Auslaßöffnung 33 anzuschließen, wobei dann in umgekehrter Weise die Einlaßöffnungen 32 den Kaltwasserstrom in zwei Teilströme aufteilen und der eine Kaltwasserteilstrom unmittelbar in eine separate Mischkammer, die z. B. im Auslaufrohr 23 ausgebildet sein kann, geführt, während der zweite Kaltwasserstrom dem Warmwasserüberlaufspeicher zugeführt wird und die Warmwasserleitung vom Überlaufspeicher ebenfalls der Mischkammer, z. B. im Auslaufrohr 23, zugeleitet wird.

Schließlich können bei den dargestellten Mischventilen, wenn die aufeinanderliegenden Keramikscheiben, z. B. durch ein Auswaschen des an den Anlageflächen erforderlichen Fettfilms, schwergängig werden, im montierten Zustand die Scheiben sowie die anderen Gleitflächen über die Bohrungen 112, 131 mit Schmiermittel versorgt werden. Damit kann die Leichtgängigkeit wieder hergestellt werden.

**Patentansprüche**

1. Wassermischventil mit einem Handgriff (4, 45) zur Einstellung des Mischungsverhältnisses und der Durchflußmenge und einem Gehäuse (1), in dem Ein- und Auslaßöffnungen sowie wenigstens zwei parallel zueinanderliegende Ventilscheiben (3, 30) als Baueinheit angeordnet sind, wobei die eine Scheibe als Ventilsitzscheibe (30) unbeweglich im Gehäuse (1) gehaltert ist und Durchtrittsöffnungen (32, 33) für Kalt-, Warm- und Mischwasser oder Kaltwasser aufweist, während die andere Scheibe als Ventilregelscheibe (3) mit wenigstens einem Überströmkanal (35) versehen und mit dem Handgriff (4, 45) verschiebbar auf der Ventilsitzscheibe (30) gelagert ist, derart, daß der Überströmkanal (35) in unterschiedliche Überlappung mit den Durchtrittsöffnungen (32) der Ventilsitzscheibe (30) gebracht werden kann, dadurch gekennzeichnet, daß das als Armaturenkopfteil ausgebildete Gehäuse (1) zu einer Baueinheit zusammengefaßt und auf der Armatur (2) anschließ- und befestigbar ist, wobei das Gehäuse (1) einen mit der Armatur (2) fest verbindbaren Boden (11) hat, an dem ein als Haube (12, 132) ausgebildeter Gehäuseteil zur Führung und/oder Lagerung der Ventilregelscheibe (3) verdrehbar gehalten ist und dessen Seitenwand wenigstens ein Fenster (121) aufweist, in dem ein an der Ventilregelscheibe (3) angelenkter, quer zur Drehachse (15) der Haube (12, 132) verschwenkbarer Handhebel (4) radial hindurchgeführt und gelagert ist.

2. Wassermischventil nach Anspruch 1, dadurch gekennzeichnet, daß die Haube von einer Mantelhülse (12) und einem Stellring (13) gebildet ist, wobei die Mantelhülse (12) an der einen Stirnseite einen Innenflansch (122) hat, der den Boden (11) unterfaßt, und im Bereich der anderen Stirnseite ein Gewinde (123) zur Aufnahme des Stellrings (13) vorgesehen ist, mit dem die Anpreßkraft der Ventilscheiben bestimmt werden kann.

3. Wassermischventil nach den Ansprüchen 1 und 2, dadurch gekennzeichnet, daß ein Futterstück (14) in dem Gehäuse (1) vorgesehen ist, das von der oberen Stirnseite eingefügt werden kann und einerseits in das Fenster (121) und andererseits mit einem Zapfen (141) in eine zentrische Bohrung des Stellrings (13) einfaßt, und als Widerlager für die Ventilregelscheibe (3) dient sowie einen Lagerzapfen (41) des Handhebels (4) trägt.

4. Wassermischventil mit einer an der Ventilregelscheibe formschlüssig gehalterten Abdeckscheibe nach den Ansprüchen 1 bis 3, dadurch gekennzeichnet, daß die Abdeckscheibe (31) in einer Radialführung (142) des Futterstücks (14) gehalten ist.

5. Wassermischventil nach Anspruch 1 und/oder 4, dadurch gekennzeichnet, daß die Abdeckscheibe (31) eine Radialnut (311) aufweist, in die wenigstens ein im Futterstück (14) befestigter Stift (143) einfaßt und die Radialbewegung der Ventilregelscheibe (3) begrenzt.

6. Wassermischventil nach Anspruch 1 und/oder 4, dadurch gekennzeichnet, daß die Abdeckscheibe (31) eine Paßfeder trägt, die in einer entsprechend dimensionierten Radialnut in der Stirnseite des Futterstücks (14) eingreift und eine drehfeste Verbindung zum Futterstück (14) herstellt.

7. Wassermischventil nach Anspruch 1 und/oder 4, dadurch gekennzeichnet, daß an der einen Seite der Abdeckscheibe (31) ein Augenlager (312) zur Anlenkung des Handhebels (4) ausgebildet ist, das mit einem Langloch (313) parallel zur Drehachse (15) zur Aufnahme eines Verbindungsstiftes (42) versehen ist.

8. Wassermischventil nach Anspruch 7, dadurch gekennzeichnet, daß das Augenlager (312) von einer Ausnehmung (43) des Randhebels (4) umfaßt ist.

9. Wassermischventil nach den Ansprüchen 1 und 3, dadurch gekennzeichnet, daß der Handhebel (4) als Winkelhebel ausgebildet ist, wobei der im Bereich des Futterstücks (14) befindliche Teil des Randhebels (4) mit zylindrischen, parallel zum Lagerzapfen (41) angeordneten Oberflächen (44) versehen ist, so daß der Handhebel (4) unabhängig von der Schwenkstellung gedichtet aus dem Gehäuse (1) herausgeführt ist.

10. Wassermischventil nach Anspruch 1 und/oder einem weiteren Anspruch, dadurch gekennzeichnet, daß der Boden (11) wenigstens zwei auf einem Lochkreis (111) angeordnete Bohrungen (112) zur Aufnahme von Befestigungsschrauben (21) hat, außerdem daß Futterstück (14) entsprechende Bohrungen zur Betätigung der Befestigungsschrauben (21) aufweist und der Stellring (13) mit einer Vielzahl von Bohrungen (131) auf einem entsprechenden Lochkreis (111) versehen ist, so daß das zusammengefügte Armaturenkopfteil direkt mittels eines durch die entsprechenden Bohrungen (131) des Stellrings (13) geführten Schraubendrehers auf der Armatur (2) befestigbar ist.

11. Wassermischventil nach Anspruch 10, dadurch gekennzeichnet, daß an der äußeren Stirnfläche des Stellrings (13) eine Abdeckkappe (132) vorgesehen ist, die mit zwei entsprechend den Befestigungsschrauben (21) angeordneten Zapfen (133) versehen ist, so daß bei aufgesteckter Abdeckkappe (132) die Zapfen (133) durch die Bohrungen (131) des Stellrings (13) in das Futterstück (14) einfassen und somit einerseits den Stellring (13) verriegeln, andererseits die Abdeckkappe (132) am Platz halten.

12. Wassermischventil nach Anspruch 1 und/oder einem weiteren Anspruch, dadurch gekennzeichnet, daß der Innenflansch (122) der Mantelhülse (12) eine ringförmige Ausnehmung (124) hat, in die ein radialer Fortsatz (113) des Bodens (11) hineinragt, so daß der Drehwinkel des Armaturenkopfes begrenzt ist.

13. Wassermischventil nach Anspruch 1 und/oder einem weiteren Anspruch, dadurch gekennzeichnet, daß der Boden (11) lappenförmige Einschnitte (114) aufweist, die in das Gehäuse (1) hineingekantet sind und zur formschlüssigen Halterung in entsprechende Schlitze (301) der Ventilsitzscheibe (30) eingreifen.

14. Wassermischventil nach Anspruch 1 und/oder einem weiteren Anspruch, dadurch gekennzeichnet, daß zwischen dem Boden (11) und dem Innenflansch (122) ein Gleitring (115) oder andere Gleitmittel bzw. Wälzlager angeordnet sind.

15. Wassermischventil nach wenigstens einem der Ansprüche 1 bis 14, dadurch gekennzeichnet, daß etwa radial in der Wandung des als Mantelhülse (12) ausgebildeten Gehäuseteils, senkrecht zur Drehachse (15), Schwenklager (16) angeordnet sind, in denen der Handhebel (4) gelagert ist, wobei der Handhebel (4) koaxial zur Lagerachse (161) wenigstens durch ein Schwenklager (16) und das Fenster (121) aus der Mantelhülse (12) herausgeführt ist und etwa um 90° verkröpft zur Lagerachse (161) einen Handgriff (45) trägt, während im Inneren der Mantelhülse (12) der Handhebel (4) einen um etwa 90 zur Lagerachse (161) versetzten Hebelarm (46) hat, der mit der Ventilregelscheibe (3) in Verbindung steht.

16. Wassermischventil nach Anspruch 15, dadurch gekennzeichnet, daß der Handhebel (4) an zwei gegenüberliegenden Seiten radial durch die Mantelhülse (12) herausgeführt und der Handgriff (45) als Bügel ausgebildet ist.

17. Wassermischventil nach Anspruch 15 oder 16, dadurch gekennzeichnet, daß die Schwenklager (16) in schlitzartige Fenster (121) der Mantelhülse (12) fassen und längsgeteilt sind, wobei die unteren Hälften der Lagerschalen in einem Druckstück (17) für die Ventilregelscheibe (3) und die oberen Hälften in einem Druckring (18) ausgebildet sind und das Druckstück (17) mit dem Druckring (18) von oben in die Mantelhülse (12) einschiebbar und mittels eines Stellrings (13) axial gehalten sind.

18. Wassermischventil nach Anspruch 15 und/oder einem weiteren Anspruch, dadurch gekennzeichnet, daß an dem etwa senkrecht zur Ebene des Handgriffs (45) ausgebildeten Hebelarm (46) ein mit Abstand parallel zur Lagerachse (161) angeordneter Querstift (47) vorgesehen ist, der in eine entsprechende Ausnehmung (31) in der Ventilregelscheibe (3) eingreift.

19. Wassermischventil nach Anspruch 18 dadurch gekennzeichnet, daß der Handhebel (4) mit Querstift (47) einstückig, z. B. im Zinkdruckgußverfahren, hergestellt ist.

20. Wassermischventil nach Anspruch 15 und/oder einem weiteren Anspruch, dadurch gekennzeichnet, daß der als Welle (48) ausgebildete und sich etwa quer durch die Mantelhülse (12) erstreckende Teil des Handhebels (4) mit Axialanschlägen versehen ist, die an den beiden inneren Stirnflächen der Schwenklager (16) anliegen.

21. Wassermischventil nach Anspruch 19 und/oder 20, dadurch gekennzeichnet, daß die Anschläge von Verstärkungsrippen (481) gebildet sind und der Hebelarm (46) im Querschnitt etwa ein Doppel-T-Profil aufweist.

22. Wassermischventil nach Anspruch 15 und/oder einem weiteren Anspruch, dadurch gekennzeichnet, daß der Handhebel (4) aus einem Rundmaterialstab geformt ist.

23. Wassermischventil nach Anspruch 22, dadurch gekennzeichnet, daß die beiden Endbereiche des Rundmaterialstabes den Hebelarm (46) bilden und die beiden Endstücke parallel zur Lagerachse (161) angeordnet sind und als Querstift (47) wirken.

## Claims

1. Water-mixing valve having a handle (4, 45) for adjusting the mixing ratio and the flow and a housing (1) in which there are arranged as a structural unit inlet and outlet openings and at least two valve plates (3, 30) which are parallel to one another, one plate being fixedly mounted in the housing (1) as the valve seat plate (30) and having openings (32, 33) for cold, hot and mixed water or cold water, while the other plate, which is the valve regulating plate (3), is provided with at least one transfer port (35) and is mounted on the valve seat plate (30) to be movable by means of the handle (4, 45) in such a manner that the transfer port (35) can be made to overlap the openings (32) in the valve seat plate (30) by varying degrees, characterised in that the housing (1) constructed as the head portion of the fitting is assembled to form a structural unit and can be connected to and fastened on the fitting (2), the housing (1) having a base (11) which can be firmly connected to the fitting (2) and on which there is pivotably mounted a housing part in the form of a cover (12, 132) for guiding and/or mounting the valve regulating plate (3) and the lateral wall of which has at least one window (121) in which there is radially guided and mounted a hand lever (4) which is hinged to the valve regulating plate (3) and is pivotable transversely to the axis of rotation (15) of the cover (12, 132).

2. Water-mixing valve according to claim 1, characterised in that the cover is formed by a casing sleeve (12) and an adjusting ring (13), the casing sleeve (12) having at one end face an internal flange (122) which engages underneath the base (11), and in the region of the other end face there is provided a thread (123) for receiving the adjusting ring (13), by means of which the contact pressure of the valve plates can be determined.

3. Water-mixing valve according to claims 1 and 2, characterised in that there is provided in the housing (1) a lining member (14) which can be introduced from the upper end face and, engages on the one hand in the window (121) and on the other hand, by means of a peg (141), in a central bore in the adjusting ring (13), and which serves as an abutment for the valve regulating plate (3) and carries a bearing journal (41) of the hand lever (4).

4. Water-mixing valve having a cover plate mounted in positively locking manner on the valve regulating plate according to claims 1 to 3, characterised in that the cover plate (31) is mounted in a radial guide (142)

**0 172 329**

inthe lining member (14).

5. Water-mixing valve according to claim 1 and/or 4, characterised in that the cover plate (31) has a radial groove (311) in which at least one pin (143) fastened in the lining member (14) engages and limits the radial movement of the valve regulating plate (3).

6. Water-mixing valve according to claim 1 and/or 4, characterised in that the cover plate (31) has a feather key which engages in a correspondingly dimensioned radial groove in the end face of the lining member (14) and produces a non-rotatable connection to the lining member (14).

7. Water-mixing valve according to claim 1 and/or 4, characterised in that there is formed on one side of the cover plate (31) an eye-type bearing (312) for the hinging of the hand lever (4), which bearing is provided with a slot (313) parallel to the axis of rotation (15) for accommodating a connecting pin (42).

8. Water-mixing valve according to claim 7, characterised in that the eye-type bearing (312) is accommodated by a recess (43) in the hand lever (4).

9. Water-mixing valve according to claims 1 and 3, characterised in that the hand lever (4) is in the form of a bent lever, the portion of the hand lever (4) that is located in the region of the lining member (14) being provided with cylindrical surfaces (44) arranged parallel to the bearing journal (41), so that the hand lever (4) is guided out of the housing (1) in sealed manner irrespective of its pivoted position.

10. Water-mixing valve according to claim 1 and/or a further claim, characterised in that the base (11) has at least two bores (112) arranged on a hole circle (111) for accommodating fastening screws (21), the lining member (14) has corresponding bores for driving the fastening screws (21), and the adjusting ring (13) is provided with a plurality of bores (131) on a corresponding hole circle (111), so that the assembled head portion of the fitting can be fastened directly onto the fitting (2) by means of a screwdriver passed through the corresponding bores (131) in the adjusting ring (13).

11. Water-mixing valve according to claim 10, characterised in that on the outer end face of the adjusting ring (13) there is a cover cap (132) which is provided with two pegs (133) arranged in positions corresponding to those of the fastening screws (21), so that, when the cover cap (132) is put on, the pegs (133) extend through the bores (131) in the adjusting ring (13) and engage in the lining member (14) and thus on the one hand lock the adjusting ring (13) in position and on the other hand hold the cover cap (132) in place.

12. Water-mixing valve according to claim 1 and/or a further claim, characterised in that the internal flange (122) of the casing sleeve (12) has an annular recess (124) into which there projects a radial extension (113) of the base (11) so that the angle of rotation of the head of the fitting is limited.

13. Water-mixing valve according to claim 1 and/or a further claim, characterised in that the base (11) has tab-shaped cutouts (114) which are bent into the housing (1) and engage in corresponding slots (301) in the valve seat plate (30) for positively-locking mounting.

14. Water-mixing valve according to claim 1 and/or a further claim, characterised in that a slide ring (115) or some other slide means or rolling bearings is/are arranged between the base (11) and the internal flange (122).

15. Water-mixing valve according to at least one of claims 1 to 14, characterised in that pivot bearings (16) are arranged approximately radially in the wall of the housing part in the form of a casing sleeve (12), perpendicularly to the axis of rotation (15), in which pivot bearings (16) the hand lever (4) is mounted, the hand lever (4) being guided out of the casing sleeve (12), coaxially to the bearing axis (161), at least through one pivot bearing (16) and the window (121) and carrying a handle (45) angled at approximately 90° to the bearing axis (161), while inside the casing sleeve (12) the hand lever (4) has a lever arm (46) which is offset by approximately 90° with respect to the bearing axis (161) and is connected to the valve regulating plate (3).

16. Water-mixing valve according to claim 15, characterised in that the hand lever (4) is guided radially through the casing sleeve (12) on two opposite sides, and the handle (45) is in the form of a hoop.

17. Water-mixing valve according to claim 15 or 16, characterised in that the pivot bearings (16) engage in slot-like windows (121) in the casing sleeve (12) and are divided longitudinally, the lower halves of the bearing bushes being formed in a pressure member (17) for the valve regulating plate (3) and the upper halves being formed in a pressure ring (18), and the pressure member (17) and the pressure ring (18) can be pushed into the casing sleeve (12) from above and are held axially by means of an adjusting ring (13).

18. Water-mixing valve according to claim 15 and/or a further claim, characterised in that a transverse pin (47) arranged at a distance from and parallel to the bearing axis (161) is provided on the lever arm (46) which is arranged approximately perpendicular to the plane of the handle (45), which transverse pin (47) engages in a corresponding recess (31) in the valve regulating plate (3).

19. Water-mixing valve according to claim 18, characterised in that the hand lever (4) is produced in one piece with the transverse pin (47), for example by the zinc die-casting method.

20. Water-mixing valve according to claim 15 and/or a further claim, characterised in that the portion of the hand lever (4) that is in the form of a shaft (48) and extends approximately transversely through the casing sleeve (12) is provided with axial stops which abut the two inner end faces of the pivot bearings (16).

21. Water-mixing valve according to claim 19 and/or 20, characterised in that the stops are formed by reinforcing ribs (481) and the lever arm (46) is approximately double-T-shaped in cross-section.

22. Water-mixing valve according to claim 15 and/or a further claim, characterised in that the hand lever (4) is produced from a round material rod.

23. Water-mixing valve according to claim 22, characterised in that the two end regions of the round material rod form the lever arm (46) and the two end pieces are arranged parallel to the bearing axis (161) and act as the transverse pin (47).

7

**Revendications**

1. Mitigeur d'eau chaude et froide avec une poignée (4, 45) pour régler le rapport de mélange et le débit, et avec un boîtier (1) dans lequel sont disposés, en formant une unité modulaire, des orifices d'entrée et de sortie ainsi qu'au moins deux plaques de vannes (3, 30) placées parallèlement l'une par rapport à l'autre, l'une de ces plaques jouant le rôle de plaque de siège de vanne (30) étant maintenue immobile dans le boîtier (1), et comportant des orifices de passage (32, 33) pour l'eau froide, chaude et mélangée, ou bien pour l'eau froide, tandis que l'autre plaque jouant le rôle de plaque de réglage de vanne (3) est munie d'au moins un canal d'écoulement (35), et est montée sur la plaque de siège de vanne (30) de façon à pouvoir être déplacée en translation par la poignée (4, 45), de sorte que le canal d'écoulement (35) duisse être amené à différents chevauchements avec les orifices de passage (32) de la plaque de siège de vanne (30), mitigeur caractérisé en ce que le boîtier (1) réalisé sous la forme d'une pièce de tête de robinetterie et assemblé pour constituer une unité modulaire, est susceptible d'être raccordé et fixé sur la robinetterie (2), ce boîtier (1) comportant un fond (11) susceptible d'être rendu solidaire de la robinetterie (2), et sur lequel est maintenue de façon à pouvoir tourner, une partie de boîtier revêtant la forme d'un capot (12, 132) pour guider et/ou positionner la plaque de réglage de vanne (3), la paroi latérale de ce boîtier comportant au moins une fenêtre (121) que traverse radialement et dans laquelle est monté un levier (4) articulé sur la plaque de réglage de vanne (3) et susceptible de pivoter transversalement par rapport à l'axe de rotation (15) du capot (12, 132).

2. Mitigeur selon la revendication 1, caractérisé en ce que le capot est constitué par une douille-enveloppe (12) et un anneau de réglage (13), la douille-enveloppe (12) comportant sur une de ses faces frontales une collerette interne (122) qui soutient le fond (11) tandis qu'au voisinage de son autre face frontale, est prévu un filetage (123) pour recevoir l'anneau de réglage (13) grâce auquel peut être déterminé l'effort d'application de la plaque de vanne.

3. Mitigeur seion les revendications 1 et 2, caractérisé en ce qu'il e st prévu une fourrure (14) dans le boîtier (1) qui peut être insérée à partir de la face frontale supérieure et qui s'enchasse, d'une part, dans la fenêtre (121) et, d'autre part, par un téton (141) dans un perçage central d'un anneau de réglage (13), et qui joue le rôle de contre-appui pour la plaque de réglage de vanne (3) et porte un tourillon (41) du levier (4).

4. Mitigeur avec une plaque de recouvrement maintenue par interpénétration de forme contre la plaque de réglage de vanne selon les revendications 1 à 3, caractérisé en ce que cette plaque de recouvrement (31) est maintenue dans un guidage radial (142) de la fourrure (14).

5. Mitigeur selon la revendication 1 et/ou la revendication 4, caractérisé en ce que la plaque de recouvrement (31) comporte une gorge radiale (311) dans laquelle pénètre, au moins une broche (143) fixée sur la fourrure (14) et qui limite le déplacement radial de la plaque de réglage de vanne (3).

6. Mitigeur selon la revendication 1 et/ou la revendication 4, caractérisé en ce que la plaque de recouvrement (31) porte un ressort d'ajustage qui vient en prise dans une gorge radiale dimensionnée de façon correspondante dans la face frontale de la fourrure (14) et qui réalise une liaison solidaire en rotation par rapport à la fourrure (14).

7. Mitigeur selon la revendication 1 et/ou la revendication 4, caractérisé en ce que sur l'une des faces de la plaque de recouvrement (31) est prévu un coussinet fermé (312) pour articuier le levier (4), ce coussinet étant pourvu d'une boutonnière (313) parallèle à l'axe de rotation (15) pour recevoir une broche de liaison (42).

8. Mitigeur selon la revendication 7, caractérisé en ce que le coussinet fermé (312) est entouré par un évidement (43) du levier (4).

9. Mitigeur selon les revendications 1 et 3, caractérisé en ce que le levier (4) revêt la forme d'un levier coudé, la partie de ce levier (4) au voisinage de la fourrure (14) étant munie de surfaces cylindriques (44) disposées parallèlement au tourillon (41) de sorte que le levier (4) est guidé hors du boîtier (1) de façon étanche, indépendamment de sa position de pivotement.

10. Mitigeur selon la revendication 1 et/ou une autre revendication, caractérisé en ce que le fond (11) comporte au moins deux perçages (112) disposés sur un cercle de trous (111) pour recevoir des vis de fixation (21), que la fourrure (14) comporte des perçages correspondants pour maoeuvrer les vis de fixation (21), et que l'anneau de réglage (13) est muni d'une pluralité de perçages (131) sur un cercle de trous correspondants (111), de sorte que la partie de tête de robinetterie assemblée est susceptible d'être fixée directement au moyen d'un tournevis passant à travers les perçages (131) de l'anneau de réglage (13) sur la robinetterie (2).

11. Mitigeur selon la revendication 10, caractérisé en ce que sur la surface frontale externe de l'anneau de réglage (13) il est prévu un capot de recouvrement (132) qui est muni de deux tétons (133) disposés de façon correspondante aux vis de fixation (21), de sorte que lorsque ce capot dé recouvrement (132) est emboîté, les tétons (133) pénètrent par les perçages (131) de l'anneau de réglage (13) dans la fourrure (14) et vérouillent ainsi, d'une part, l'anneau de réglage (13), et, d'autre part, maintiennent en place le capot de recouvrement (132).

12. Mitigeur selon la revendication 1 et/ou une autre revendication, caractérisé en ce que la collerette interne (122) de la douille-enveloppe (12) comporte un évidement annulaire (124) dans lequel pénètre un prolongement radial (113) du fond (11) de sorte que l'angle de rotation de la tête de robinetterie est limité.

13. Mitigeur selon la revendication 1 et/ou une autre revendication, caractérisé en ce que le fond (11) comporte des entailles en forme de languettes (114) qui sont repliées vers l'intérieur du boîtier (1) et qui viennent en prise dans des fentes correspondantes (301) de la plaque de siège de vanne (30) pour assurer un maintien par interpénétration de formes.

14. Mitigeur selon la revendication 1 et/ou une autre revendication, caractérisé en ce qu'entre le fond (11) et la collerette interne (122) est disposé un anneau de glissement (115) ou bien un autre moyen de glissement, ou bien un palier à rouleaux.

15. Mitigeur selon au moins une des revendications 1 à 14, caractérisé en ce que, à peu près radialement dans la paroi de la partie de boîtier revêtant la forme d'une douille-enveloppe (12), des paliers de pivotement (16) sont dispos és perpendiculairement à l'axe de rotation (15), palier dans lequel est monté le levier (4), ce levier (4) étant guidé co-axialement par rapport à l'axe (161) des paliers, au moins à travers un palier de pivotement (16) et à travers la fenêtre (121) hors de la douille-enveloppe (12) et portant une poignée (45) coudée de 90° par rapport à l'axe (161) des paliers, tandis qu'à l'intérieur de la douille-enveloppe (12) ce levier (4) comporte un bras de levier (46) décalé d'environ 90° par rapport à l'axe (161) des paliers et qui est en liaison avec la plaque de réglage de vanne (3).

16. Mitigeur selon la revendication 15, caractérisé en ce que le levier (4) est guidé radialement vers l'extérieur à travers la douille-enveloppe (12) sur deux côtés opposés, et que la poignée (45) revêt la forme d'un étrier.

17. Mitigeur selon la revendication 15 ou 16, caractérisé en ce que les paliers de pivotement (16) sont saisis et divisés longitudinalement dans des fenêtres en forme de fentes (121) de la douille-enveloppe (12), les moitiés inférieures des coussinets de paliers étant ménagées dans une pièce de pression (17) pour la plaque de réglage de vanne (3), tandis que les moitiés supérieures sont ménagées dans un anneau de pression (18) et la pièce de pression (17) avec l'anneau de pression (18) étant susceptibles d'être introduits à partir du haut dans la douille-enveloppe (12) et étant maintenus axialement au moyen d'une bague d'arrêt (13).

18. Mitigeur selon la revendication 15, et/ou une autre revendication, caractérisé en ce que sur le bras de levier (46) disposé à peu près perpendiculairement au plan de la poignée (45) est prévue une broche transversale (47) disposée parallèlement à l'axe (161) des paliers, à une certaine distance de ceux-ci, et qui vient en prise dans un évidement correspondant (31) dans la plaque de réglage de vanne (3).

19. Mitigeur selon la revendication 18, caractérisé en ce que le levier (4) est réalisé d'une seule pièce avec la broche transversale (47) par exemple selon un procédé de moulage de zinc sous pression.

20. Mitigeur selon la revendication 15, et/ou une autre revendication, caractérisé en ce que la partie du levier (4) réalisée sous la forme d'un arbre (48) et s'étendant à peu près transversalement à travers la douille-enveloppe (12) est munie de butées axiales qui s'appliquent sur les deux surfaces frontales internes des paliers de pivotement (16).

21. Mitigeur selon la revendication 19, et/ou 20, caractérisé en ce que les butées sont constituées par des nervures de renforcement (481) et que le bras de levier (46) a en section transversal, un profil à peu près en forme de double T.

22. Mitigeur selon la revendication 15, et/ou une autre revendication, caractérisé en ce que le levier (4) est formé à partir d'un barreau en un matériau rond.

23. Mitigeur selon la revendication 22, caractérisé en ce que les deux zones d'extrémités du barreau en matériau rond, constituent le bras de levier (46) et les deux pièces d'extrémités sont disposées parallèlement à l'axe des paliers (161) et agissent en tant que broches transversales (47).

Fig.1

13  132  15  133  141  14  1

IV  IV
123  44
V  V  41
43  312
VI  3.1  VI  42
4
313
44
12  3
12
30
115  301
II  II  115
113  35  33  21  112  11  111  2
122

Fig.2

112  11  111
32
114  122
124  34
113  12
114
33  34
124  32
114  111
112

Fig. 3

Fig. 4

Fig.5

Fig.6

Fig.7

311  143  15  132  13
14
41
312
12
31
42
35
3
115
30
115
11
21
33
23
2
22

Fig. 8

Fig. 9

Fig. 10

Fig. 11

Fig. 12

45

4

48

481

481

46

48

47

47

Fig. 13

45

4

48

48

46

46

47

47